# EUROPEAN PATENT SPECIFICATION

(11) **EP 2 925 091 B1**
(45) Date of publication and mention of the grant of the patent: **04.09.2019**
(21) Application number: 14161995.7
(22) Date of filing: 27.03.2014
(51) Int. Cl.: H05B 33/08, H05B 37/02

(54) **Spotlight LED module and light module**
Scheinwerfer-LED-Modul und Lichtmodul
Module de DEL de projecteur et module lumineux

(43) Date of publication of application: 30.09.2015
(73) Proprietor: Tridonic GmbH & Co KG, 6851 Dornbirn (AT)
(72) Inventor: Borsoi, Giulio, 6850 Dornbirn (AT)
(74) Representative: Rupp, Christian

(56) References cited:
- US-A1- 2013 082 598

## Description

The present invention is directed to a spotlight LED module (hereafter abbreviated 'SLE') and to a light module comprising at least one LED. In particular, the SLE and the light module are both provided with the ability for radar motion sensing.

Motion sensing through radar techniques (e.g. Doppler or time-of-flight) is known from the state of the art. Typically, dedicated radar sensors are installed in properly selected positions in an environment, in which motion is to be detected. The radar sensors usually have an omnidirectional radiation pattern, and can sense through walls, windows and furniture. It is also known from the state of the art to use radar sensors to turn on the lights of a certain area as soon as motion is detected, and to turn off said lights after a certain time, during which no relevant motion is anymore detected. An example of a lamp with an integrated radar motion sensor is disclosed in US 2013/0082598 A1.

A disadvantage of the radar motion sensing techniques known from the state of the art is that the radiation patterns of the radar sensors do not match well the shape of the area, which is to be monitored. This mismatch may lead to false triggering of the radar sensors, in particular when a moving object is inside a sensed area, but is outside an actual area of interest. A further disadvantage is that the area covered by the radar sensors is usually rather large, which limits the possibility for efficient power saving. Furthermore, the radar sensors need to be mounted and powered up independently from e.g. a light module, thus requiring additional wiring and installation expertise (e.g. the required wiring includes connections to mains, and the required installation includes positioning and orientation of the radar sensors).

In view of the above mentioned disadvantages, the present invention intends to improve the state of the art. In particular, the present invention aims to remove the need for external motion sensors and the associated installation complexity. The present invention has the object to make an area sensed by motion sensors as similar as possible to an illuminated area. The present invention also aims for a much finer control of the power consumption by turning on only those lights, which provide useful light according to the sensed motion.

The above mentioned object of the present invention is achieved by the solution provided in the enclosed independent claims. Advantageous implementations of the present invention are further defined in the dependent claims. In particular, according to the claimed spotlight LED module and light module, respectively, a solution to the above-mentioned problem is provided by integrating a properly designed antenna into the respective module.

The present invention is directed to a SLE comprising a light emitting surface comprising at least one LED, a reflector or a reflector connection surrounding the light emitting surface, and an integrated antenna for radar motion sensing.

The integrated antenna removes the need for external radar sensors. Therefore, the installation complexity required in the state of the art for motion sensing through radar techniques can be greatly reduced. Furthermore, by integrating in the SLE an antenna and a light emitting surface, the probability of a false triggering of the motion sensor is reduced, because the area monitored by the radar motion sensor matches more closely the illuminated area. This is due to the fact that the radiation pattern of the integrated antenna is preferably very similar to the illumination pattern of the light emitting surface. The SLE of the present invention allows for better power saving, and may particularly ensure that in a system of a plurality of SLEs only those SLEs corresponding to sensed motion are activated.

Preferably, the integrated antenna and the rest of the SLE are mechanically integrated such that they cannot be separated. For example, the integrated antenna may be soldered or screwed to the SLE. Preferably, the at least one LED and the integrated antenna are connected to the same mains terminals powering the SLE.

Advantageously, the integrated antenna and the light emitting surface are provided on the same printed circuit board (PCB).

The integrated antenna may be provided by copper traces, i.e. by microstrip lines, on the PCB.

Advantageously, the reflector or reflector connection surround the integrated antenna.

Thereby, the illumination pattern of the light emitting surface can be even better matched to the radiation pattern of the integrated antenna.

Advantageously, the integrated antenna is connected, preferably via a microstrip line, with radar electronics or a connector for connecting radar electronics.

Preferably, the at least one LED of the SLE is thereby powered using the same mains terminals as the radar electronics. For example, the radar electronics can be DC-powered using an AC/DC converter, which is also used for the at least one LED. Alternatively, the radar electronics is supplied with an AC voltage from AC terminals and have their own AC/DC converter.

Advantageously, the integrated antenna is a monopole antenna.

A monopole antenna is simple and cheap to construct. The monopole antenna can, for instance, be a simple piece of wire protruding from the surface of e.g. a PCB of the SLE or of the light emission surface. The monopole antenna is preferably rod-shaped.

Advantageously, the monopole antenna has a length of about 1/8 to 1, preferably about 1/4, of a wavelength used for the radar motion sensing.

The wavelength is determined by the operating frequency of the radar electronics. The radar motion sensing can thereby be carried out more effectively.

Advantageously, the monopole antenna is centered in the light emitting surface or is placed adjacent the outer periphery of the light emitting surface.

In other words, the monopole may be placed in the center of the light emission surface or may be placed just outside the light emission surface. When the monopole is placed in the center of the light emission surface, the radiation pattern of the integrated antenna can be matched most closely to the light emission pattern of the light emitting surface. If the monopole antenna is placed just outside of the light emission surface, a good match is also achieved between said patterns, but the light output of the SLE is influenced less by the monopole.

Preferably, the illumination pattern of the light emitting surface and the radiation pattern of the integrated antenna differ in terms of coverage of an area by preferably less than 20%, more preferably less than 10%, even more preferably less than 5%, and even more preferably less than 2%.

Advantageously, the integrated antenna is a patch antenna, preferably realized by at least one microstrip line.

Microstrip lines can, for instance, be realized by copper traces provided on one side of the PCB, while the other side is provided with or connected to ground. Microstrip lines are inexpensive transmission lines that can be easy realized in, for example, a FR4 (or another dielectric) PCB. Microstrip lines can thus provide very cheap planar antennas. The patch antenna may for example be a simple rectangular patch antenna or may be a more complex antenna array.

Advantageously, the integrated antenna is a ring antenna.

The ring antenna is preferably realized by at least one copper trace having a circular shape and a hole in its middle. Such a ring antenna is well suited for surrounding the light emission surface of the SLE.

Advantageously, the ring antenna surrounds the light emitting surface.

Advantageously, the ring antenna is connected along its entire inner circumference to a ground plane.

The connection to the ground plane prevents light from coupling into the PCB.

Advantageously, an inner diameter of the ring antenna is larger by about 0 to 10 mm, preferably by less than about 5 mm, than the diameter of the light emitting surface.

In other words, a gap is provided between the ring antenna and the light emitting surface. However, the gap is preferably made as small as possible.

Advantageously, a width of the ring antenna is about 1 to 12 mm, preferably about 4 to 9 mm.

The distance between the ring antenna and the ground plane is preferably within about 0.1 to 1.5 mm, more preferably within about 0.25 to 1 mm.

Advantageously, the ring antenna comprises elements, which alter its ring shape.

That means in an normally annular ring antenna, additional elements may be provided, which slightly change the annular shape, in order to improve the bandwidth of the antenna, and in order to match the resonance properties of the antenna to an operating frequency of the radar motion sensing.

The present invention is further directed to a light module comprising at least one LED, and a radar based motion sensor, wherein a coverage of the radar based motion sensor corresponds essentially to the light coverage of the light module.

In particular, the difference between the coverage of the motion sensor and the light coverage of the light module is preferably less than 20%, more preferably less than 10%, even more preferably less than 5%.

With the light module of the present invention it is possible to match a radiation pattern of a radar sensor to an illumination pattern of the light module. The same advantages as for the SLE described above are thus realized.

The present invention is explained in the following in more detail in relation to the attached drawings.

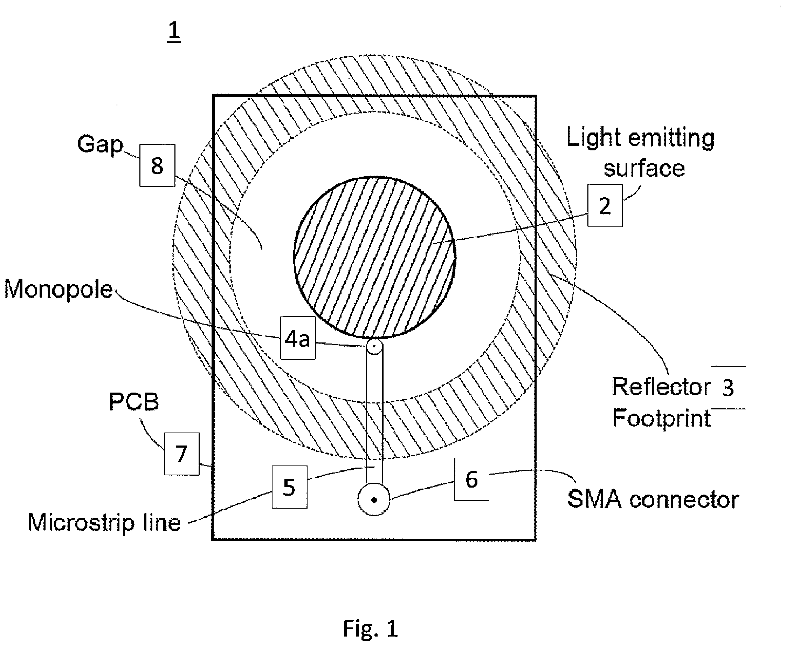

The figures 1-8 show SLEs according to embodiments of the present invention.

Figure 1 shows an SLE 1, which comprises a light emitting surface 2, which again comprises at least one LED. The at least one LED can completely form the light emitting surface 2, or may be included within the light emitting surface 2. The light emitting surface 2 is preferably circular. The at least one LED is preferably a white light emitting LED. The at least one LED can, for example, be a blue LED provided with a suitable phosphor coating to produce white light by light mixing, or can be a triplet of a red, blue and green LED for mixing white light. The light emitting surface 2 can specifically be realized by a transparent cover provided over one or a plurality of LEDs, wherein the transparent cover may additionally be provided with phosphor particles to convert the wavelength of the light emitted by the one or more LEDs. In its entirety the light emitting surface 2 preferably appears as homogenously emitting, more preferably white light emitting, surface.

The SLE 1 of fig. 1 further comprises a reflector 3 or a reflector connection surrounding the light emitting surface 2. Specifically, in fig. 1 a reflector 3 footprint is shown. The reflector 3 footprint may indicate the surface of the SLE 1 that is covered by a base part of a preferably metal reflector 3. The reflector 3 footprint may also indicate the shape of a reflector connection, for example, a groove or other attachment means, to which a reflector 3 may be attached. The reflector 3 helps to shape the light emitted from the light emitting surface 2. The SLE 1 of fig. 1 also includes an integrated antenna 4a, 4b for radar motion sensing. In fig. 1 the integrated antenna is specifically a monopole antenna 4a. The monopole antenna 4a is preferably provided on the same PCB 7 as the light emitting surface 2. The monopole 4a is inside and further preferably surrounded by the reflector 3 or the reflector connection, i.e. by the reflector 3 footprint. Thereby, the reflector 3 also helps to shape the beam radiated from the radar sensor.

In fig. 1 the monopole antenna 4a is connected via a microstrip line 5 to an SMA connector. The SMA connector is one example for a connector, other connectors e.g. coaxial cable connectors may be applied as well. Thus, for the SLE of fig. 1, the radar electronics required for radar motion sensing may be an external device that can be connected to the monopole antenna 4a via the SMA connector 6.

In fig. 1 a gap 8 exists between the reflector 3 footprint and the light emitting surface 2. Further, in fig. 1 the monopole 4a is preferably provided directly on the periphery of the light emitting surface 2, but may also be provided anywhere in the gap 8. The closer the monopole 4a is to the light emitting surface 2, the closer the illumination pattern of the light emitting surface 2 and the radiation pattern of the monopole antenna 4a may be matched. If the radiation pattern is symmetrical and aligned to the illumination pattern it enables an improved efficiency of the radiation and reduces distortions in the emission pattern.

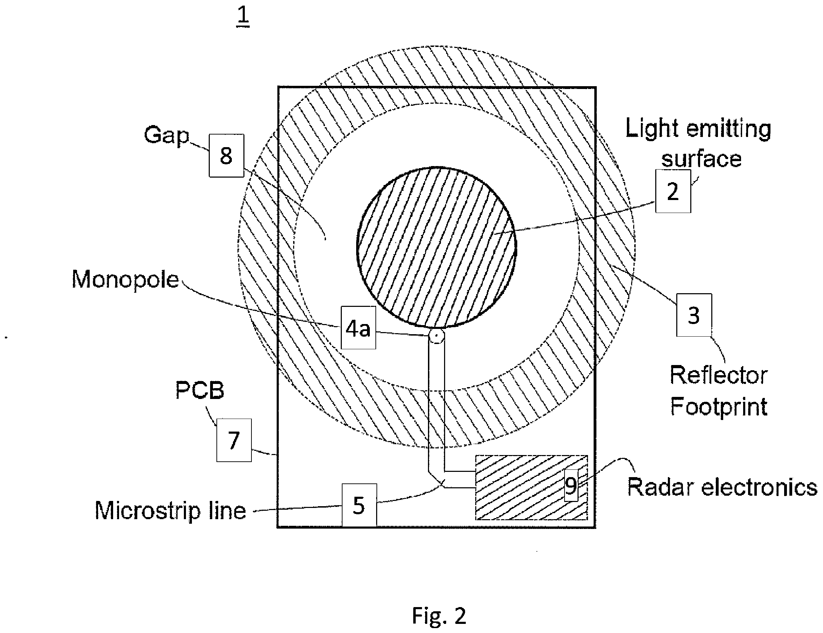

Figure 2 shows another SLE 1, which is identical to the SLE 1 shown in fig. 1, except that the monopole antenna 4a is connected via the microstrip line 5 directly with radar electronics, which are integrated with the SLE 1. The radar electronics 9 may be an SMD package soldered onto a PCB 7 of the SLE 1. The SLE is thus on its own capable of radar motion sensing.

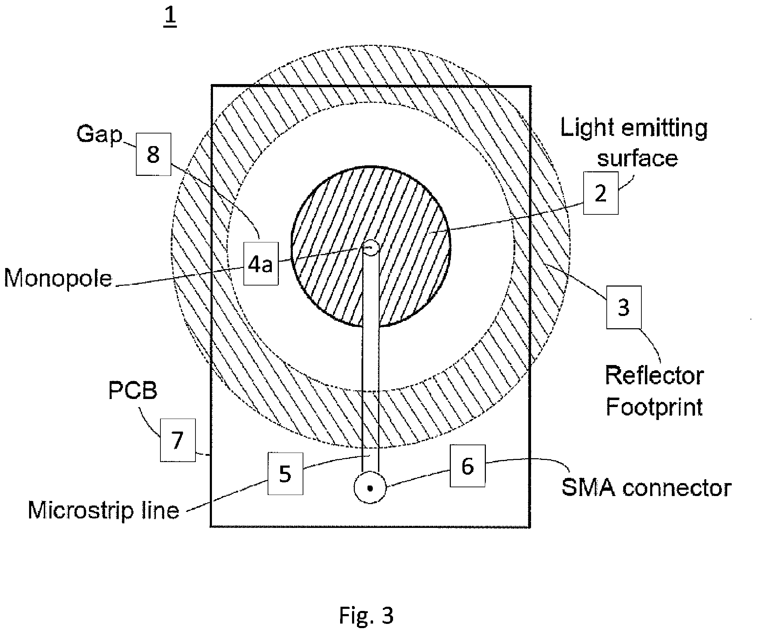

Figure 3 shows another SLE 1, which is similar to the SLE 1 shown in fig. 1, except that the monopole antenna 4a is now provided in the center of the light emitting surface 2. Thereby, the illumination pattern of the light emitting surface 2 and the radiation pattern of the monopole antenna 4a can be matched most closely.

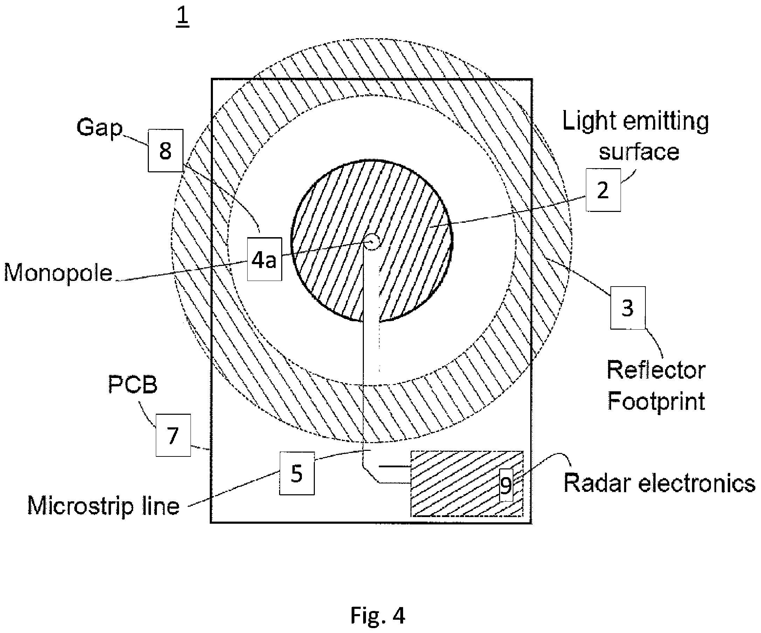

Figure 4 shows another SLE 1, which is similar to the SLE 1 shown in fig. 3, except that like shown in fig. 2 the radar electronics 9 are integrated with the SLE 1.

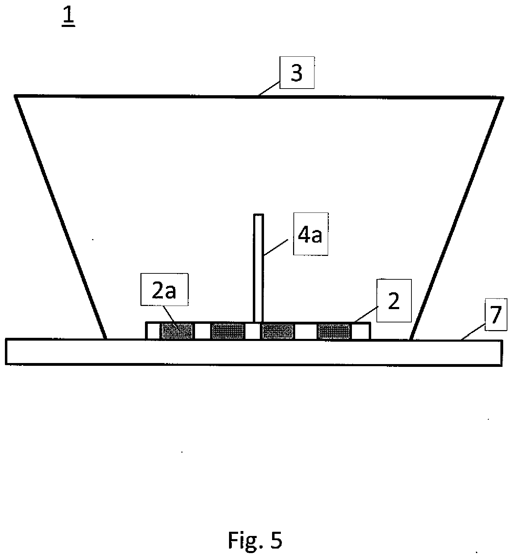

Figure 5 shows a side view of an SLE 1 according to one of the figs. 1-4. The light emitting surface 2 is provided on a PCB 7, and includes at least one LED 2a. In this case, four LEDs 2a are shown within the light emitting surface 2. The LEDs 2a may be covered by a diffusing plate, ,which may optionally include phosphor particles, so that the light emitting surface 2 is seen from above as a homogenously emitting light source, preferably a white light source.

Surrounding the light emitting surface 2 is a reflector 3, which is either part of the SLE 1 or may be attached to the SLE 1 via the reflector connection. The reflector 3 is made of metal so that both radar waves and light may be reflected, in order to be directed. The reflector 3 thus helps to match the illumination pattern of the light emitting surface 2 and the radiation pattern of the monopole antenna 4a.

The monopole antenna 4a is preferably perpendicular to the light emitting surface 2 on the PCB and protrudes by a length that is about 1/8 to 1 of a wavelength, more preferably 1/4 of a wavelength, which is used for radar motion sensing, i.e. of a wavelength obtained at the operating frequency of the radar electronics.

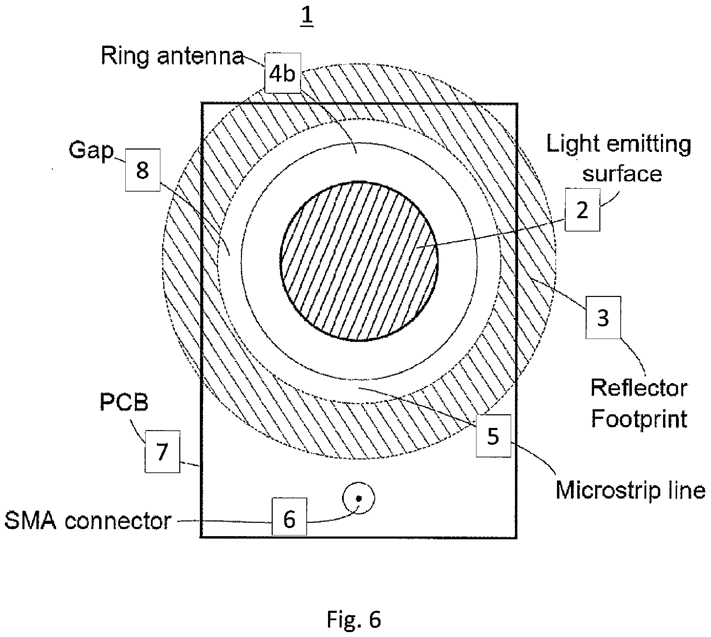

Figure 6 shows another SLE 1, which is similar to the SLE 1 shown in fig. 1, except that the monopole antenna 4a shown in fig. 1 is replaced by a ring antenna 4b. The ring antenna 4b is preferably realized by one or more copper traces surrounding the light emitting surface 2. The ring antenna 4b is attached via the microstrip line 5 to an SMA connector 6.

The ring antenna 4b may touch the light emitting surface 2. Preferably, however, the inner diameter of the ring antenna 4b is larger than the light emitting surface diameter by 0 to 10 mm, preferably by less than 5 mm. The width of the ring antenna 4b is preferably 1 to 12 mm, more preferably 4 to 9 mm. The ring antenna 4b is preferably further connected to a ground plane, more preferably along its complete inner side, and is preferably distanced from the ground plane by 0.1 to 1.4 mm, more preferably 0.25 to 1 mm.

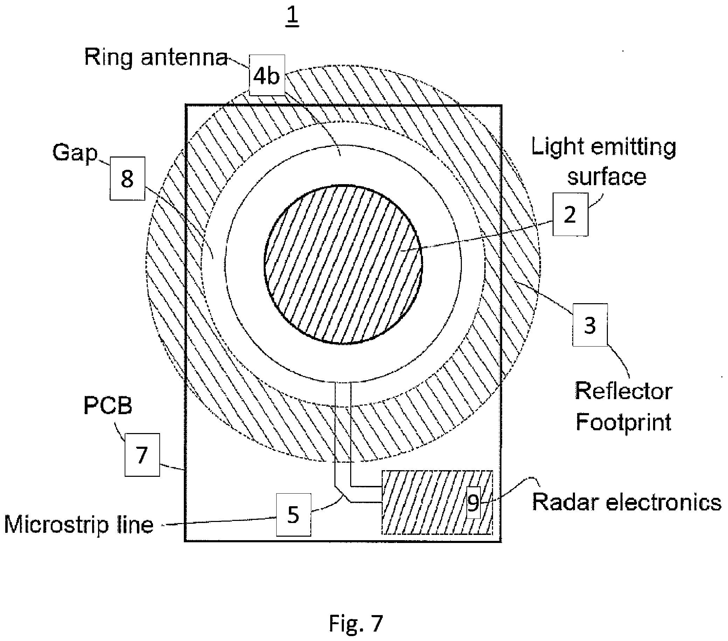

Figure 7 shows another SLE 1, which is similar to the SLE 1 shown in fig. 6, except that the ring antenna 4b is connected via the microstrip line 5 to radar electronics 9, which are integrated with the SLE 1. As described above, the radar electronics 9 may be provided as a SMD package soldered onto the PCB 7 of the SLE 1.

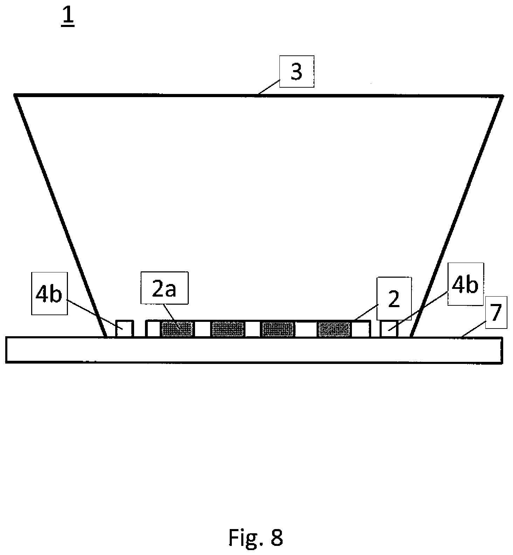

Figure 8 shows a side view of an SLE 1 according to one of the figs. 6 and 7. Similar to fig. 5, the PCB 7, the light emitting surface 2 including at least one LED 2a and the reflector 3 are shown. In fig. 8 the ring-shaped antenna 4b surrounds the light emitting surface 2. Again, the radiation pattern of the ring antenna 4b as well as the illumination pattern of the light emitting surface 2 are influenced and shaped by the reflector 3.

The above figs. 1 to 8 thus show generally different LED based light modules, which are combined with a radar-based motion sensor. For all light modules, the coverage of the motion sensor corresponds essentially to the light coverage of the LED-based light module. The difference between the coverage of the radar-based motion sensor and the light coverage is preferably less than 20%, more preferably less than 10%, even more preferably less than 5%, and even more preferably less than 2%.

In an alternative embodiment other types of antenna may be applied. Instead of a monopole antenna or a patch antenna it is also possible to use a different type like for instance a chip antenna, e.g. a SMD antenna.

In summary, the present invention proposes an SLE 1 and a light module, respectively, with integrated antenna for radar motion sensor. The present invention thereby achieves a good match between the radiation pattern of the motion sensor and a light source of the respective module. In particular, a position of the integrated antenna 4a, 4b inside the reflector 3 makes it possible to use the reflector 3 also as a beam-shaper for the radar sensor. It can also be guarantees that the motion sensor has no metal obstacles in front of it, which would otherwise prevent it from properly detecting motion.

The present invention specifically achieves a simpler installation of a motion sensor. In particular, the present invention presents a self-contained solution with motion sensing capabilities for a spotlight module and a light module, respectively. Furthermore, the motion sensing is localized, i.e. has a high sensitivity motion in the illuminated area, but a low sensitivity to motion outside the illuminated area. Therefore, it is less prone to false triggering, and allows a standalone operation without any additional configurations.

## Claims

1. Spotlight LED Module, hereafter abbreviated 'SLE', (1) comprising a light emitting surface (2) comprising at least one LED, a reflector (3) surrounding the light emitting surface (2), and
an integrated antenna (4a, 4b) for radar motion sensing,
wherein the integrated antenna (4a, 4a) is connected with radar electronics (9),
**characterized in that** the integrated antenna (4a, 4b), the light emitting surface (2), and the radar electronics (9) are provided on the same Printed Circuit Board, hereafter abbreviated 'PCB' (7), wherein the integrated antenna (4a,4b) is positioned inside the surrounding reflector (3), wherein the reflector (3) is made from metal so that both radar waves and light are reflected.

2. SLE (1) according to claim 1, wherein the integrated antenna (4a, 4b) is a monopole antenna (4a).

3. SLE (1) according to claim 2, wherein the monopole antenna (4a) has a length of 1/8 to 1 of a wavelength used for the radar motion sensing.

4. SLE (1) according to claim 2 or 3, wherein the monopole antenna (4a) is centered in the light emitting surface (2) or is placed adjacent the outer periphery of the light emitting surface (2).

5. SLE (1) according to claim 1, wherein the integrated antenna (4a, 4b) is a patch antenna.

6. SLE (1) according to claim 5, wherein the integrated antenna (4a, 4b) is a ring antenna (4b).

7. SLE (1) according to claim 6, wherein the ring antenna (4b) surrounds the light emitting surface (2).

8. SLE (1) according to claim 6 or 7, wherein the ring antenna (4b) is connected along its entire inner circumference to a ground plane.

9. SLE (1) according to claim 7 or 8, wherein an inner diameter of the ring antenna (4b) is larger by 0 to 10 mm than the diameter of the light emitting surface (2).

10. SLE (1) according to one of the claims 6 to 9, wherein a width of the ring antenna (4b) is 1 to 12 mm.

11. SLE (1) according to one of the claims 6 to 10, wherein the ring antenna (4b) comprises elements, which alter its ring-shape.

12. Light module comprising
at least one LED, a reflector (3) surrounding the at least one LED,
a radar-based motion sensor comprising an integrated antenna (4a,4b), and
wherein a coverage of the radar based motion sensor corresponds to the light coverage of the light module,
**characterized in that** the at least one LED and the radar-based motion sensor are provided on the same Printed Circuit Board, hereafter abbreviated 'PCB' (7), and wherein the integrated antenna (4a,4b) of the radar-based motion sensor is positioned inside the surrounding reflector (3), wherein the reflector (3) is made from metal so that both radar waves and light are reflected.

## Patentansprüche

1. Strahler-LED-Modul (1), im Weiteren mit SLE (Spotlight LED Modul) abgekürzt, Folgendes umfassend:
eine lichtemittierende Fläche (2), die mindestens eine LED umfasst,
einen Reflektor (3), der die lichtemittierende Fläche (2) umgibt, und
eine integrierte Antenne (4a, 4b) für eine Radarbewegungserfassung,
wobei die integrierte Antenne (4a, 4b) mit Radarelektronik (9) verbunden ist,
**dadurch gekennzeichnet, dass** die integrierte Antenne (4a, 4b), die lichtemittierende Fläche (2) und die Radarelektronik (9) auf derselben Leiterplatte, im Weiteren mit PCB (Printed Circuit Board) abgekürzt, bereitgestellt sind, wobei die integrierte Antenne (4a, 4b) im Inneren des umgebenden Reflektors (3) positioniert ist, wobei der Reflektor (3) aus Metall besteht, so dass sowohl Radarwellen als auch Licht reflektiert werden.

2. SLE (1) nach Anspruch 1, wobei die integrierte Antenne (4a, 4b) eine Monopolantenne (4a) ist.

3. SLE (1) nach Anspruch 2, wobei die Monopolantenne (4a) eine Länge von 1/8 bis 1 einer Wellenlänge aufweist, die für die Radarbewegungserfassung verwendet wird.

4. SLE (1) nach Anspruch 2 oder 3, wobei die Monopolantenne (4a) in der lichtemittierenden Fläche (2) zentriert ist oder angrenzend am Außenumfang der lichtemittierenden Fläche (2) platziert ist.

5. SLE (1) nach Anspruch 1, wobei die integrierte Antenne (4a, 4b) eine Patchantenne ist.

6. SLE (1) nach Anspruch 5, wobei die integrierte Antenne (4a, 4b) eine Ringantenne (4b) ist.

7. SLE (1) nach Anspruch 6, wobei die Ringantenne (4b) die lichtemittierende Fläche (2) umgibt.

8. SLE (1) nach Anspruch 6 oder 7, wobei die Ringantenne (4b) entlang ihres gesamten Innenumfangs mit einer Massefläche verbunden ist.

9. SLE (1) nach Anspruch 7 oder 8, wobei ein Innendurchmesser der Ringantenne (4b) um 0 bis 10 mm größer als der Durchmesser der lichtemittierenden Fläche (2) ist.

10. SLE (1) nach einem der Ansprüche 6 bis 9, wobei eine Breite der Ringantenne (4b) 1 bis 12 mm beträgt.

11. SLE (1) nach einem der Ansprüche 6 bis 10, wobei die Ringantenne (4b) Elemente umfasst, die deren Ringform verändern.

12. Lichtmodul, Folgendes umfassend:
mindestens eine LED, einen Reflektor (3), der die mindestens eine LED umgibt,
einen radar-basierten Bewegungssensor, der eine integrierte Antenne (4a, 4b) umfasst, und
wobei eine Abdeckung des radar-basierten Bewegungssensors der Lichtabdeckung des Lichtmoduls entspricht,
**dadurch gekennzeichnet, dass** die mindestens eine LED und der radar-basierte Bewegungssensor auf derselben Leiterplatte, im Weiteren mit PCB (Printed Circuit Board) abgekürzt, bereitgestellt sind, und wobei die integrierte Antenne (4a, 4b) des radar-basierten Bewegungssensors im Inneren des umgebenden Reflektors (3) positioniert ist, wobei der Reflektor (3) aus Metall besteht, so dass sowohl Radarwellen als auch Licht reflektiert werden.

## Revendications

1. Module à DEL de projecteur, 'SLE' en abrégé ci-après, (1) comprenant :
une surface d'émission de lumière (2) comprenant au moins une DEL,
un réflecteur (3) entourant la surface d'émission de lumière (2), et
une antenne intégrée (4a, 4b) pour la détection de mouvement par radar,
dans lequel l'antenne intégrée (4a, 4b) est connectée à une électronique de radar (9),
**caractérisé en ce que** l'antenne intégrée (4a, 4b), la surface d'émission de lumière (2), et l'électronique de radar (9) sont prévues sur la même carte de circuit imprimé, 'PCB' en abrégé ci-après, (7), dans lequel l'antenne intégrée (4a, 4b) est positionnée à l'intérieur du réflecteur enveloppant (3), dans lequel le réflecteur (3) est réalisé à partir d'un métal de sorte qu'à la fois les ondes radar et la lumière soient réfléchies.

2. SLE (1) selon la revendication 1, dans lequel l'antenne intégrée (4a, 4b) est une antenne monopolaire (4a).

3. SLE (1) selon la revendication 2, dans lequel l'antenne monopolaire (4a) a une longueur égale à 1/8 à 1 d'une longueur d'onde utilisée pour la détection de mouvement par radar.

4. SLE (1) selon la revendication 2 ou 3, dans lequel l'antenne monopolaire (4a) est centrée dans la surface d'émission de lumière (2) ou est placée adjacente à la périphérie extérieure de la surface d'émission de lumière (2).

5. SLE (1) selon la revendication 1, dans lequel l'antenne intégrée (4a, 4b) est une antenne pastille.

6. SLE (1) selon la revendication 5, dans lequel l'antenne intégrée (4a, 4b) est une antenne annulaire (4b).

7. SLE (1) selon la revendication 6, dans lequel l'antenne annulaire (4b) entoure la surface d'émission de lumière (2).

8. SLE (1) selon la revendication 6 ou 7, dans lequel l'antenne annulaire (4b) est connectée le long de sa circonférence intérieure entière à un plan de masse.

9. SLE (1) selon la revendication 7 ou 8, dans lequel un diamètre intérieur de l'antenne annulaire (4b) est plus grand de 0 à 10 mm que le diamètre de la surface d'émission de lumière (2).

10. SLE (1) selon l'une des revendications 6 à 9, dans lequel une largeur de l'antenne annulaire (4b) est égale à 1 à 12 mm.

11. SLE (1) selon l'une des revendications 6 à 10, dans lequel l'antenne annulaire (4b) comprend des éléments, qui modifient sa forme annulaire.

12. Module de lumière comprenant :
au moins une DEL, un réflecteur (3) entourant ladite au moins une DEL,
un capteur de mouvement basé sur un radar comprenant une antenne intégrée (4a, 4b), et
dans lequel une couverture du capteur de mouvement basé sur un radar correspond à la couverture de lumière du module de lumière,
**caractérisé en ce que** ladite au moins une DEL et le capteur de mouvement basé sur un radar prévus sur la même carte de circuit imprimé, 'PCB' en abrégé ci-après, (7), et dans lequel l'antenne intégrée (4a, 4b) du capteur de mouvement basé sur un radar est positionnée à l'intérieur du réflecteur enveloppant (3), dans lequel le réflecteur (3) est réalisé à partir d'un métal de sorte qu'à la fois les ondes radar et la lumière soient réfléchies.
